# EUROPEAN PATENT APPLICATION

(11) **EP 2 232 979 A2**
(43) Date of publication of application: **29.09.2010**
(21) Application number: 10156756.8
(22) Date of filing: 17.03.2010
(51) Int. Cl.: A01D 89/00, A01F 15/10

(54) **Agricultural machine**

(30) Priority: 25.03.2009 US 411011
(71) Applicant: Deere & Company, Moline, IL 61265-8098 (US)
(72) Inventor: Anstey, Henry D, Ottumwa, IA 52501 (US); Derscheid, Daniel E, Ottumwa, IA 52501 (US)
(74) Representative: Magin, Ludwig Bernhard

(57) **Abstract**

An agricultural machine (10) having a crop pick up section (22), a crop chamber (14) and a crop repositioning device (24). The crop chamber (14) has an opening and the crop repositioning device (24) receives crop material (12) from the crop pick up section (22) and assists in the delivery of the crop material (12) to the opening. The crop repositioning device (34) is configured to reposition at least a portion of the crop material (12) dependent upon the detected crop material distribution in the crop pickup section (22), the detected crop material distribution in the opening and/or the detected crop material distribution in the crop chamber (14).

## Description

This invention relates to an agricultural machine with a crop repositioning device and a to a method for repositioning crop in said agricultural machine.

A round baler system includes a pickup mechanism, which picks the crop material from the ground and supplies it to a bale forming chamber. The bale forming chamber, also referred to as a crop chamber, receives the crop material and includes a series of side-by-side moving belts which rotate the crop material into a round bale. Typically the bale forming chamber has a crop inlet that has a width that corresponds to the width of the bale formed within the bale forming chamber. The crop material is typically initially formed into windrows on the ground after it is cut and processed through a conditioner. Windrows can have a variable width dependent upon the equipment forming the windrow and the density of the crop material as well as weather conditions can affect the distribution of the crop material in the windrow.

As the baler is driven across the field encountering the crop material, the point at which the windrow encounters the baler can vary across the inlet of the baling mechanism in a biased or even a random manner. It is desirable for the bale to be formed in a substantially round, uniform manner with the material being supplied in a manner which results in the desired bale configuration.

Various techniques have been devised to accomplish the desired bale configuration including a baling system with steering that directs the baler so that the inlet is presented with different portions of the windrow, as disclosed in US Patent No. 4,702,066. This disclosure indicates that turning movements of the baler are alternately in opposite directions transverse to the windrow and take place with increasing frequency as the collection chamber produces a cylindrical bale. Another approach is to use an upper auger to perform the function as the distributor to spread the material as disclosed in US Patent No. 4,637,201. Yet another approach is to utilize a pair of upper stub augers located above the end of a lower auger system as disclosed in US Patent No. 6,601,375. Each of these approaches suffer from problems, such as the oscillatory actions of the first approach on the pulling tractor, and the lack of customizable control in each of these examples.

What is needed in the art is a crop positioning system that actively manages the crop material as it is delivered to a crop chamber to more effectively manage the baling process.

The present invention provides a for a proper crop distribution in an agricultural machine by a method and an apparatus for the distribution of crop material in a cylindrical or rectangular baling system or in another crop harvesting machine.

The invention in one form is directed to an agricultural machine having a crop pick up section, a crop chamber, and a crop repositioning device. The crop chamber has an opening and the crop repositioning device receives crop material from the crop pick up section and assists in the delivery of the crop material to the opening. The crop repositioning device is configured to reposition at least a portion of the crop material dependent upon the detected crop material distribution in the crop pickup section, the detected crop material distribution in the opening and/or the detected crop material distribution in the crop chamber or other parameters.

Several embodiments of the invention are described below and shown in the drawing, in which:
- Fig. 1: is a schematic illustration of a baler incorporating an embodiment of a crop repositioning device of the present invention;
- Fig. 2: is a schematic illustration of a profile of a bale shape that is avoided by implementation of the present invention;
- Fig. 3: is another bale shape that is avoided by the present invention;
- Fig. 4: is yet another bale shape that is avoided by the present invention;
- Fig. 5: illustrates in schematic form an embodiment of elements of the crop repositioning device of the baler of Fig. 1;
- Fig. 6: illustrates another embodiment of a crop repositioning device utilized in the baler of Fig. 1;
- Figs. 7A and 7B: schematically illustrate a side views of the baler of Fig. 1 and the movement of crop material therethrough;
- Fig. 8: is a schematical side view of a crop repositioning device utilized in the baler of Fig. 1;
- Fig. 9: is another schematical side view of an embodiment of a crop repositioning device utilized in the baler of Fig. 1;
- Fig. 10: is yet another schematical side view of an embodiment of the crop repositioning device utilized in the baler of Fig. 1;
- Fig. 11: is still yet another schematical side view of an embodiment of a crop repositioning device utilized in the baler of Fig. 1;
- Fig. 12: is a further schematical side view of an embodiment of the crop repositioning device utilized in the baler of Fig. 1; and
- Fig. 13: is a schematical representation of a control system utilized with the crop repositioning device of Figs. 1 and 5-12.

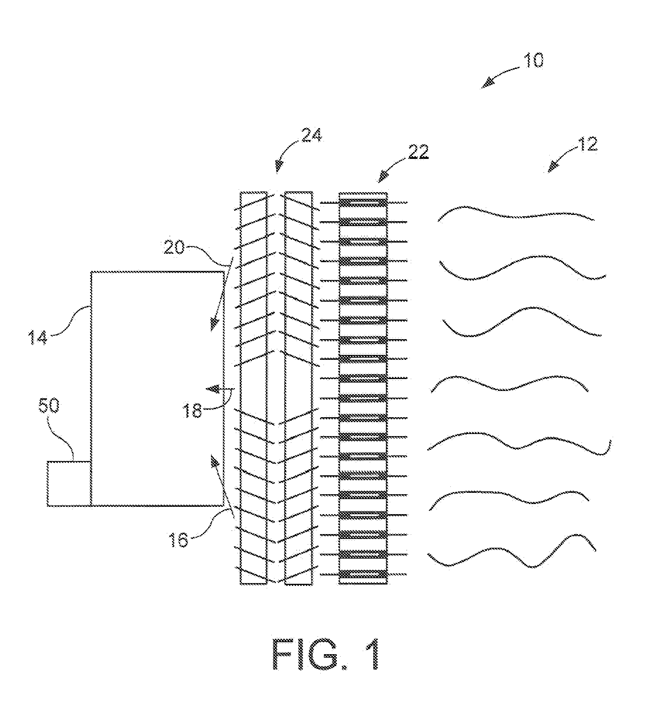

Referring now to the drawings, and more particularly to Fig. 1, there is illustrated an agricultural machine 10 configured as a baler for the processing of crop material 12 distributed on a surface of a field to produce cylindrical or rectangular bales. Agricultural machine 10 can also be an agricultural crop harvesting device. Agricultural machine 10 includes a collection area 14 also known as a crop chamber 14 where a bale is formed during the operation of the agricultural machine 10. Crop material 12 is directed as shown by inputs 16, 18, and 20, which schematically illustrate the flow of crop material 12. A Pick up section 22 picks up crop material 12 from the ground and directs it to a crop repositioning device also known as a crop repositioning device 24. The crop repositioning device 24 is here schematically illustrated as two augers each having oppositely directed flighting. The functioning of the crop repositioning device 24 takes the distributed crop material 12 and converges it so that it is uniformly presented to the crop chamber 14. If crop material 12 is positioned or distributed differently than schematically shown then the crop repositioning device 24 functions to reposition crop material 12 so that it is uniformly presented to crop chamber 14. For example, if crop material 12 is all concentrated towards the bottom of Fig. 1 in the two lower schematical lines, then crop repositioning device 24 operates so that input 16 is directed as shown but inputs 18 and 20 are directed so that they are more oriented as input 16. Another example is, if crop material 12 is concentrated at the middle of the schematic distribution so that as crop material 12 enters crop repositioning device 24, crop repositioning device 24 distributes the crop material 12 from the middle to the outer portions such that inputs 16 and 20 would be redirected so that some of the crop material flows outward to the outer edges of crop chamber 14, here the top and bottom of the illustration, so that the crop material 12 is distributed in a uniform manner at the inlet of crop chamber 14.

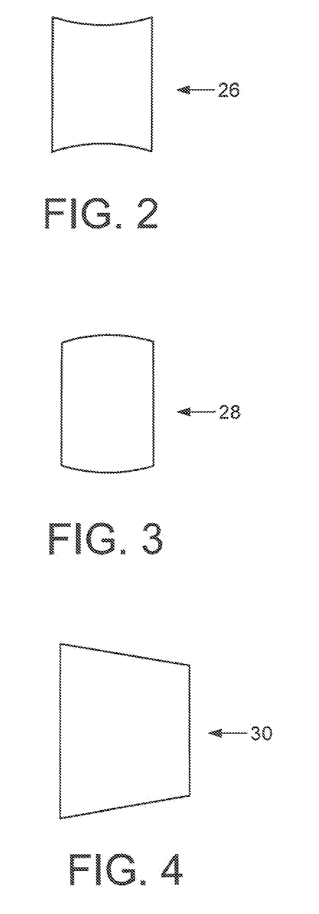

Now, additionally referring to Figs. 2-4, there are illustrated different profile variations in bales that are to be avoided by the use of the present invention. Bale 26 illustrates too little of crop material 12 being delivered to the center of the bale 26. In an opposite situation, bale 28 illustrates too much material being concentrated in the middle of bale 28. Yet another undesirable bale shape 30 illustrates too much material being directed to one side of bale 30. The present invention detects the positioning of the crop material 12 at either the bale level, when the crop material 12 is in the crop chamber, when the crop material 12 is in the distribution section 24, or when crop material 12 is in the crop pick up section 22. The present invention proactively arranges for the distribution of crop material 12 so that it uniformly enters crop chamber 14 or so that it is directed to crop chamber 14 to appropriately alter the bale shape to result in the proper distribution of crop material 12 in the baling operation.

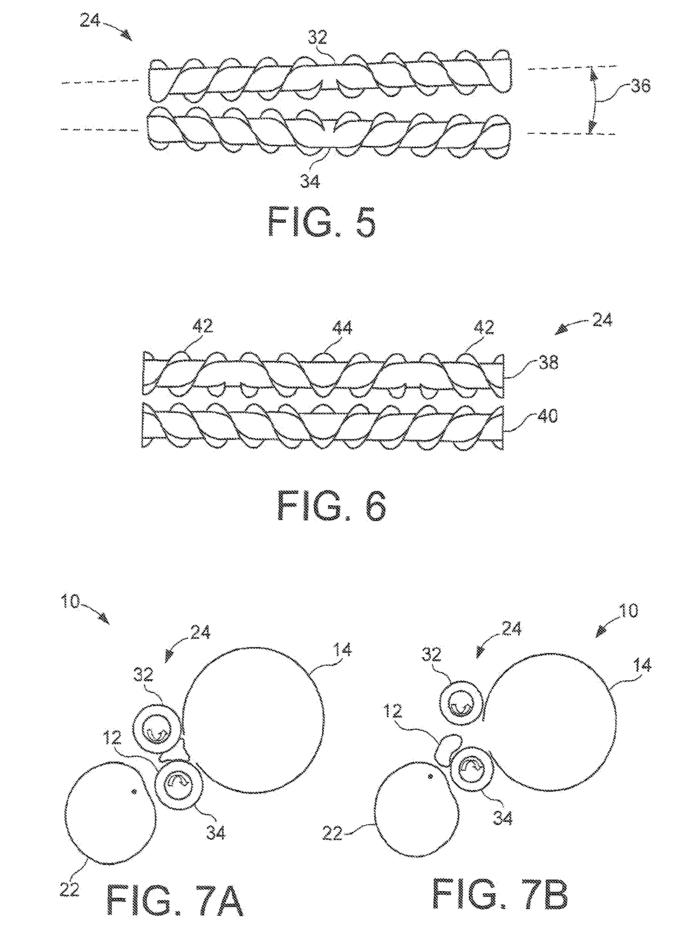

Now, additionally referring to Fig. 5, there is illustrated a crop repositioning device 24 including an auger 32 and an auger 34 that illustrates that auger 32 has been moved relative to auger 34 to apply different amounts of pressure on crop material 12 entering rotating augers 32 and 34. Angle 36 is under the control of a control system 50 for the repositioning of augers 32 and 34 relative to each other in an angular manner. As crop material 12 enters the closer space portion of augers 32 and 34, the crop material 12 is more aggressively moved than in the areas where augers 32 an 34 are more widely spaced. Although actuators for the movement of augers 32 and 34 are not illustrated, the actuators can be realized in a variety of ways including hydraulically and/or mechanically with support members, levers or gears appropriately positioned so that augers 32 and 34 can properly rotate. Additionally, the speed of rotation of augers 32 and 34 can be varied to accommodate the amount of crop material 12 being encountered and/or the position of the crop material as it enters augers 32 and 34. Additionally the speed and direction of rotation of augers 32 and 34 can be selected independent of each other in order to adjust the amount and position of the crop material as it enters crop chamber 14. Augers 32 and 34 can be even driven so that material is not driven in the same direction by each of the augers 32, 34.

Now, additionally referring to Fig. 6, there is shown a crop repositioning device 24 including augers 38 and 40 with auger 40 being substantially similar to auger 34 in the previous embodiment. Auger 38 includes one flight 44 that is counter to the direction of flights 42 in terms of the direction in which material would be directed based on the revolutionary movement of auger 38. The distribution of crop material 12 that enters crop repositioning device 24 is altered based upon the direction of rotation of auger 38 as well as the positioning of the crop material relative to the contravening flights 42 and 44. The direction and rotation of augers 38 and 40 are under the control of control system 50.

Now, additionally referring to Figs. 7A and 7B, there are shown in the schematic side view profile form a crop repositioning device 24 that illustrates the movement of auger 32 relative to auger 34 as crop material 12 is at different positions in Figs. 7A and 7B. In Fig. 7A, crop repositioning device 24 is more aggressively moving crop material 12 than it is in Fig. 7B. Fig. 7B illustrates auger 32 being separated to a greater degree than that illustrated in Fig. 7A. Another understanding of Figs. 7A and 7B is that the profiles are at different portions along conveyors 32 and 34 so that Fig. 7A would correspond to portion of auger 32 towards the left as shown in Fig. 5 with Fig. 7B corresponding to the portion of augers 32 and 34 to the right of Fig. 5.

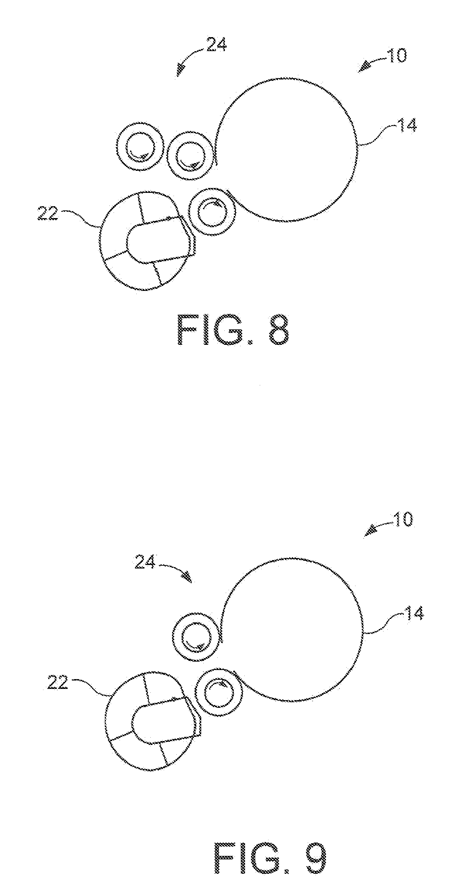

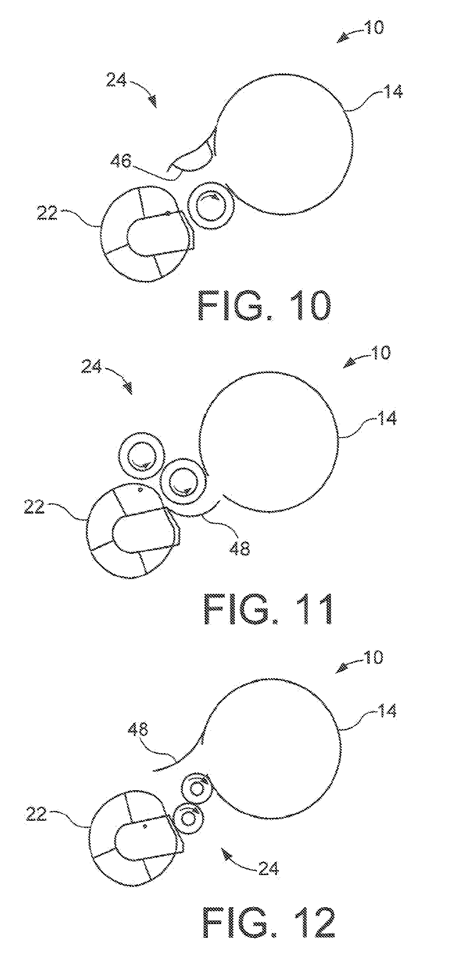

Now, additionally referring to Fig. 8-12, there are illustrated several embodiments of crop repositioning device 24. In Fig. 8 crop repositioning device 24 includes more than two undershot augers with crop material being directed by two undershot augers and one overshot auger. Fig. 9 illustrates a combination of a single overshot and a single undershot auger in crop repositioning device 24. In Fig. 10 there is illustrated a crop guiding device 46 or diverter that is a part of crop repositioning device 24. Crop guiding device 46 can be angled vanes that are either statically positioned or dynamically positioned by control system 50. Also, the distance between the overshot auger and the crop guiding device 46 can be varied to thereby alter the effect of the guiding device 46 in the movement of the crop material entering therebetween. Fig. 11 illustrates crop repositioning device 24 additionally having a containment device 48 that is either statically positioned or dynamically moved by control system 50 so that undershot augers that are directing crop material 12 thereagainst will have a differing effect depending upon the relative positioning of the augers and containment device 48. In an other embodiment illustrated in Fig. 12, overshot augers are supplying crop material 12 against containment device 48, here located above the augers and in a manner similar to that used in Fig. 11, whereas the containment device 48 may be repositioned relative to the augers to thereby alter the effect of the auger movement on the crop material 12 being moved into crop chamber 14.

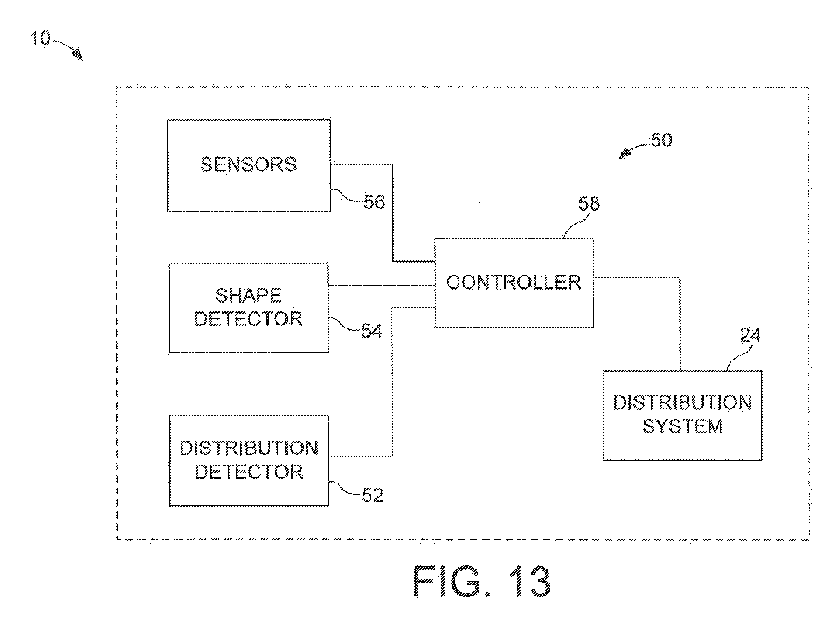

Now, additionally referring to Fig. 13, there is illustrated a control system 50 that is associated with agricultural machine 10. Control system 50 has a distribution sensor 52 or detector that senses the distribution of crop material 12 in the crop repositioning device 24 and produces a signal corresponding thereto. Shape sensor 54 detects the shape of the bale, such as bales 26, 28 or 30 and provides a signal relative to that shape. Sensors 56 may be in the form of load cells or pressure sensors associated with the augers, guiding device 46, or containment device 48 so that the pressure of crop material moving thereby can be used to estimate the amount of crop material 12 moving at different positions along the opening or various parts of the crop repositioning device 24. Signals from these sensors 54, 56 are directed to controller 58 so that controller 58 can then issue controlling commands to crop repositioning device 24 so that the separation of the augers, the angles of the augers, the direction and speed of the augers, the angle of the guiding devices and the relative positioning of the containment devices and the augers can be varied so that the crop material 12 is appropriately supplied to chamber 14 for the uniform production of a bale.

The present invention advantageously allows for an even crop flow to the crop chamber and this reduces machine plugging, reduced capacity, and uneven bales. The present invention contemplates and illustrates augering devices that may be overshot or undershot, or a combination thereof. The augering devices may be utilized with guiding devices in the form of vanes or power feeders or may be utilized with containment devices in the form of a formed sheet of material and/or undriven rollers. Control system 50 evaluates volumetric data to provide for a uniform output from crop repositioning device 24. As previously discussed, crop repositioning device 24 may control crop distribution by changing the axial position of at least one auger, a guiding device, or containment device. The system may additionally control crop repositioning device 24 by changing the non-axial position of at least one augering device, guiding device, or containment device in an angular manner. The spacing between adjacent augering devices, guiding devices, or containment devices is also utilized by various embodiments of the present invention and is controllably altered by control system 50.

Control system 50 can vary the pitch, diameter, or direction of flighting on at least one of the augering devices. This is accomplished in a mechanical, hydraulic, pneumatic or other manner and may even result in altering the flights on the augers or changing the diameter of at least one of the augering devices. The tube diameter of at least one auger can be varied to alter the interaction between the auger and the crop material. Control system 50 can additionally have a provision to allow operator input to control the desired shape of the bale. It is also contemplated that although a uniform bale is desirable that in the event some other shape is desired that the present invention can be directed to provide a bale of a non-uniform shape. The elements of crop repositioning device 24 including augers, guiding devices, or containment devices may change the position due to mechanical forces acting on them such as pressure from the crop flow moving therebetween. This can be detected by sensors 56 and utilized by controller 58 to alter the functioning of crop repositioning device 24. Although the augering devices have been illustrated as having flights thereon, it is also anticipated that teeth, ribs, and/or other items may be included for the feeding of the crop material.

The present invention will work on several principles of operation. The present invention can control the balance between lateral crop movement as it converges or diverges versus direct crop feeding to thereby properly position crop material 12 as it moves into agricultural machine 10. Alternatively, the present invention can change the position of at least one augering device, guiding device, or containment device to thereby change the distribution of crop material across the opening to chamber 14. The interaction between the augering devices, guiding devices, and/or containment devices are determinative of the distribution of crop across the opening to chamber 14.

The present invention detects the windrow distribution of crop material 12 along the entry avenue to agricultural machine 10 and redistributes it so that a substantially level distribution of crop material 12 enters the opening to crop chamber 14. This provides a substantially uniform distribution of crop material 12 so that the bale formed in crop chamber 14 is of uniform construction.

Advantages of the present invention include increased feeding capacity, reduced crop plugging, less dependence on operator skill to create volumetric uniform feeding to the crop chamber, higher quality crop package in the form of uniform bale shapes, it provides for converging crop to a narrower width and lowers the load and wear on machine components that would have been caused by slug feeding of crop material.

Having described the preferred embodiment, it will become apparent that various modifications can be made without departing from the scope of the invention as defined in the accompanying claims.

## Claims

1. An agricultural machine (10), in particular an agricultural crop harvesting machine, a cylindrical baler or a rectangular bailer comprising:
a crop pick-up section (22);
a crop chamber (14) having an opening; and
a crop repositioning device (24) receiving crop material (12) from said crop pick-up section (22) and assisting in the delivery of said crop material (12) to said opening, said crop repositioning device (24) being configured to reposition at least a portion of said crop material (12) dependent upon at least one of a detected crop material distribution in said crop pick-up section (22), a detected crop material distribution in said opening and a detected crop material (12) distribution in said crop chamber (14).

2. Agricultural machine of claim 1, wherein said crop repositioning device (24) includes at least one of an augering device (32, 34) with a single auger, an augering device (32, 34) with multiple augers, a guiding device (46) and a containment device (48).

3. Agricultural machine of claim 2, wherein said crop repositioning device (24) is configured to reposition said crop material (12) by at least one of changing an axial position, changing a non-axial position and changing an angle of said at least one of said augering device (32, 34), said guiding device (46) and said containment device (48).

4. Agricultural machine according to one or more of the preceding claims, **characterized in that** said crop repositioning device (24) is configured to at least one of:
- change speeds of said augers (32, 34) relative to each other,
- change a direction of rotation of at least one of said augers (32, 34),
- vary a pitch of flighting on at least one of said augers (32, 34),
- vary a diameter of flighting on at least one of said augers (32, 34),
- vary direction of flighting on at least one of said augers (32, 34) and
- vary a diameter of at least one of said augers (32, 34).

5. Agricultural machine according to one or more of the preceding claim , wherein said crop repositioning device (24) is configured to reposition at least a portion of said crop material (12) dependent upon:
- forces acting upon said crop repositioning device (24) or
- detected crop material distribution in said crop pick-up section (22) or
- a shape of a bale (26, 28, 30) as detected by a shape sensor (54).

6. Agricultural machine according to one or more of the preceding claim, wherein said crop repositioning device (24) is configured to reposition at least a portion of said crop material (12) such that said crop material (12) is substantially leveled across said opening in said crop chamber (14).

7. A method for repositioning crop in an agricultural machine (10) having a crop repositioning device (24), a crop pick-up section (22) and a crop chamber (14) with an opening, **characterized in that**:
- a controller (58) of the crop repositioning device (24) receives a signal from a sensor (52, 54, 56) representative of at least one of a detected crop material distribution in said crop pick-up section (22), a detected crop material distribution in said opening and a detected crop material distribution in said crop chamber (14),
- the crop repositioning device (24) receives crop material (12) from said crop pick-up section (22) and assists in the delivery of said crop material (22) to said opening, and
- **in that** said controller (58) sends a command to cause the crop repositioning device (24) to reposition at least a portion of said crop material (12) dependent upon said signal.

8. Method according to claim 7 applied in a crop repositioning device (24) comprising at least one of augering device (32, 34) with a single auger, an augering device with multiple augers, a guiding device (46) and a containment device 48, **characterized in that** said crop material (12) is repositioned by at least one of:
- changing an axial position,
- changing a non-axial position
- changing an angle of said at least one of said augering device (32, 34), said guiding device (46) and said containment device (48),
- change speeds of said augers relative to each other, and
- change a direction of rotation of at least one of said augers, vary a pitch of flighting on at least one of said augers, vary a diameter of flighting on at least one of said augers, vary direction of flighting on at least one of said augers and vary a diameter of at least one of said augers.

9. Method according to claim 7 or 8, **characterized in that** a signal representative of a shape of the bale (26, 28, 30) is provided by a bale shape sensor (54) to said controller (58) and that at least a portion of said crop material (12) is repositioned dependent upon said signal representative of the shape of the bale (26, 28, 30).

10. Method according to one or more of the preceding claims 7 to 9, **characterized in that** repositioning of at least a portion of said crop material (12) is provided dependent upon forces acting upon the crop repositioning device (24), or detected crop material distribution in said crop pick-up section (22) or detected crop material distribution in said opening.
